# EUROPÄISCHE PATENTSCHRIFT

(11) **EP 2 185 569 B1**
(45) Veröffentlichungstag und Bekanntmachung des Hinweises auf die Patenterteilung: **24.09.2014**
(21) Anmeldenummer: 08774711.9
(22) Anmeldetag: 03.07.2008
(51) Int. Cl.: C07F 5/02

(54) **VERFAHREN ZUR HERSTELLUNG SÄUREARMER LITHIUMBORATSALZE UND MISCHUNGEN AUS SÄUREARMEN LITHIUMBORATSALZEN UND LITHIUMHYDRID**
METHOD FOR PRODUCING LOW-ACID LITHIUM BORATE SALTS AND MIXTURES OF LOW-ACID LITHIUM BORATE SALTS AND LITHIUM HYDRIDE
PROCÉDÉ POUR PRODUIRE DES BORATES DE LITHIUM, À FAIBLE TENEUR EN ACIDE, ET MÉLANGES DE BORATES DE LITHIUM À FAIBLE TENEUR EN ACIDE ET D'HYDRURES DE LITHIUM

(30) Priorität: 04.07.2007 DE 102007031199
(43) Veröffentlichungstag der Anmeldung: 19.05.2010
(73) Patentinhaber: Chemetall GmbH, 60487 Frankfurt (DE)
(72) Erfinder: DIETZ, Rainer, 63329 Egelsbach (DE); WIETELMANN, Ulrich, 61381 Friedrichsdorf (DE); LISCHKA, Uwe, 60437 Frankfurt (DE); EMMEL, Ute, 65929 Frankfurt (DE)
(74) Vertreter: Rottmayer, Hans
(86) Internationale Anmeldenummer: PCT/EP2008/058599
(87) Internationale Veröffentlichungsnummer: WO 2009/004059

(56) Entgegenhaltungen:
- WO-A-02/28500
- DE-A1- 10 209 429
- US-B1- 7 172 834

## Beschreibung

Gegenstand der Erfindung ist ein Verfahren zur Herstellung von säurearmen Lithiumboratsalzen für Anwendungen in Batterieelektrolyten.

Lithiumbatterien haben sich als Energiespeicher vor allem für Anwendungen in der portablen Elektronik ("Laptops", Mobiltelefone) wegen ihrer hohen Energie- und Leistungsdichte gegenüber anderen Batterietypen durchgesetzt. Man unterscheidet Lithiumprimärbatterien, das sind nicht wieder aufladbare Batterien mit zumeist Lithiummetallanoden, von sekundären Systemen ("Lithiumakkus"), also wieder aufladbaren Batterien.

Beide Batterietypen enthalten wasserfreie flüssige oder gelartige Ionen leitfähiger Elektrolyte, in denen Leitsalze, beispielsweise LiPF₆, LiBF₄, Lithiumimide, Lithiummethide oder Lithiumboratsalze, beispielsweise Lithiumbis(oxalato)borat (LiBOB, entsprechend Li[B(C₂O₄)₂]), in gelöster Form vorliegen.

Lithiumboratsalze wie LiBOB bewirken in sekundären Lithiumbatterien im Vergleich zu Lithiumelementfluoriden wie LiPF₆ oder LiBF₄ eine signifikante Verbesserung der Zyklenstabilität und der Sicherheitseigenschaften (Cox, S.S. Zhang, U. Lee, J.L. Allen, T.R. Jow, J. Power Sources 46, 2005, 79-85). Dies geht auf eine veränderte Form der Schutzschichtbildung auf der Kohlenstoffanode einer Lithiumbatterie zurück: Boratelektrolyte bewirken die Bildung einer dünnen, sehr stabilen Li⁺-leitfähigen Schicht auf dieser Anode, die auch bei höheren Temperaturen stabil ist und deshalb gefährliche Zersetzungsreaktionen zwischen geladener Anode und beispielsweise dem Elektrolyten verhindert (J.-C.Panitz, U.Wietelmann, M.Wachtler, S.Ströbele, M.Wohlfahrt-Mehrens, J. Power Source. 153, 2006, 396-401; Broschüre der Chemetall 2005). Durch die boratsalzbedingten Verbesserungen an der Schutzschicht ergeben sich für den Anwender neue Möglichkeiten der Elektrolytformulierung. So kann beispielsweise auf das schlecht handhabbare Ethylencarbonat (1,3-Dioxolan-2-on) verzichtet und stattdessen Propylencarbonat (4-Methyl-1,3-Dioxolan-2-on) verwendet werden (K.Xu, S.Zhang, R.Jow, J. Power Sources 143, 2005, 197-202).

Als Lithiumboratsalze werden beispielsweise solche der allgemeinen Formeln 1 oder II verwendet: 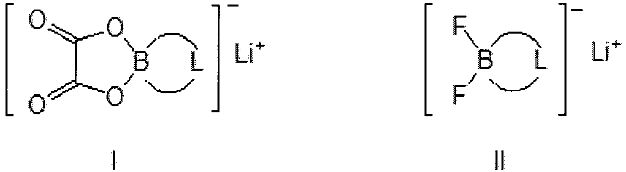 L ist ein Chelatbildner mit zwei endständigen Sauerstoffatomen mit der allgemeinen Formel 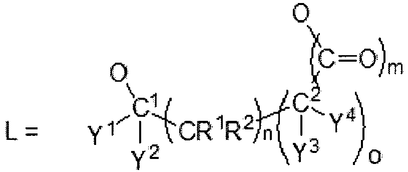 wobei gilt:
- Y¹ und Y² bedeuten zusammen = O, mit m = 0 oder 1, n = 0 oder 1, o = 0 und R¹ und R² unabhängig voneinander H, F, Cl, Br, OR (R = Alkyl) oder R' (Alkyl), oder
- Y¹, Y², Y³, Y⁴ bedeuten jeweils unabhängig voneinander OR (R = Alkyl), H, F, Cl, Br, R' (Alkyl), mit m = 0 oder 1, n = 0, o = 1, oder
- Y¹, C¹, Y³ und C² sind Glieder eines 5-oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei Y² und Y⁴ entfallen, mit n = 0 und m = 0 oder 1, o = 1

Lithiumboratsalze werden im Allgemeinen durch Umsetzung einer oxidischen Borverbindung (beispielsweise Borsäure, Boroxid oder einem Borsäureester) mit Oxalsäure oder einem Oxalsäuresalz bzw. einem Fluoriddonor, beispielsweise BF₃, sowie ggf. weiteren Dihydroxyverbindungen, beispielsweise Dicarboxylverbindungen, Diphenolen, und einem Lithiumrohstoff, beispielsweise Lithiumcarbonat, Lithiumhydroxid, Lithiumalkoholat oder dergleichen, hergestellt.

Die gebräuchlichste Methode zur Herstellung von Bis(chelato)boraten vom Typ I besteht darin, die Komponenten in einem Lösungsmittel zu suspendieren und das Wasser azeotrop abzuscheiden (E. Bessler u. J. Weidlein, Z. Naturforsch. 37b, 1020-1025, 1982).

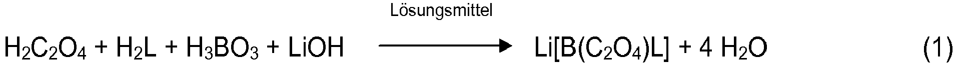

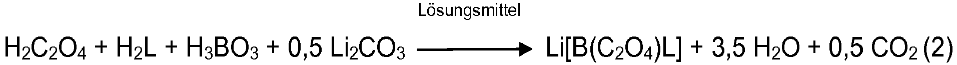

Als Lösungsmittel eignen sich solche, die mit Wasser ein Azeotrop bilden, beispielsweise gesättigte oder aromatische Lösemittel wie Heptan, Octan, Toluol oder Cumol. In einer Variante kann das Alkalimetall auch über das Lithiumsalz des Liganden (LiHL oder Li₂L) oder ein Metallborat, beispielsweise LiBO₂, eingebracht werden, beispielsweise:

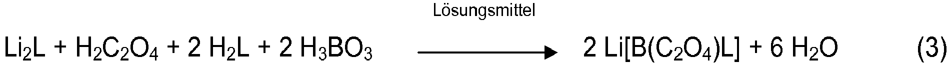

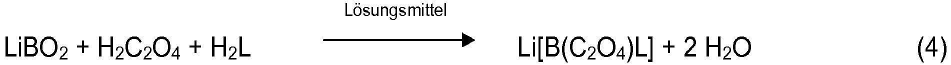

Eine weitere Herstellmöglichkeit besteht in der Umsetzung eines Metalltetraalkoxyborat M[B(OR)₄] mit zwei Äquivalenten der Liganden in einem organischen Lösungsmittel (DE-C-19829030), beispielsweise: 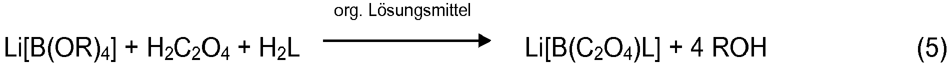 wobei R ein Alkylrest ist , beispielsweise H₃C oder C₂H₅.

Als organisches Lösungsmittel kann der Alkohol selbst (der in der Reaktion gebildet wird, ROH), beispielsweise Methanol oder Ethanol oder ein aprotisches, polares Solvenz, beispielsweise Acetonitril, Verwendung finden.

Schließlich ist es bekannt, LiBOB in homogener wässriger Lösung durch Umsetzung gemäß (1), (2), (3) oder (4) herzustellen und es nach Totaleindampfung und Vakuumtrocknung in fester, wasserfreier Form zu isolieren. Der Nachteil dieses Verfahrens besteht darin, dass die Raum-/Zeit-Ausbeute relativ gering ist. So werden gemäß DE-C-19829030, Beispiel 1, aus ca. 3,1 kg Reaktionslösung nur 185 g Produkt erhalten.

DE-A-10108608 offenbart, Alkalimetallbis(chelato)borate nach den oben aufgeführten Reaktionen ohne Zugabe von Lösungsmitteln in heterogener Phase zu synthetisieren und das bei der Reaktion gebildete Wasser zu entfernen. Nachteilig an diesem Verfahren sind die relativ schlechten Trocknungsergebnisse. So wird in von DE-A-10108608, Beispiel 1, ein Produkt mit einem Wassergehalt von 0,4 % offenbart. Dieser Wassergehalt liegt weit über den für Batterieleitsalze geforderten Werten.

Verbindungen der allgemeinen Formel II können durch Umsetzung von Bortrifluorid mit Lithiumsalzen hergestellt werden. Beispielsweise wird Lithiumdifluorooxalatoborat (LiDFOB) durch Reaktion von BF₃•Et₂O (ein Komplex von Bortrifluorid mit Diethylether als Solvat) und Li₂C₂O₄ hergestellt (S.S. Zhang, Electrochem. Commun. 8 (2006, 1423-1428):

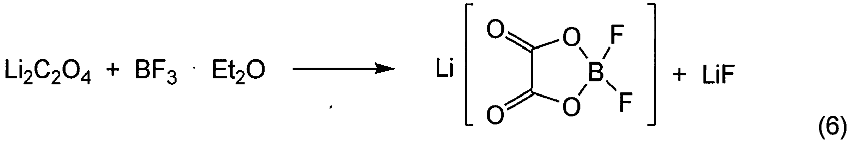

Viele Leitsalze zersetzen sich bei Anwesenheit protischer Verbindungen wie Wasser mehr oder weniger schnell, beispielsweise gemäß:

LiPF₆ + H₂O → LiF + 2 HF↑ + POF₃↑ (7)

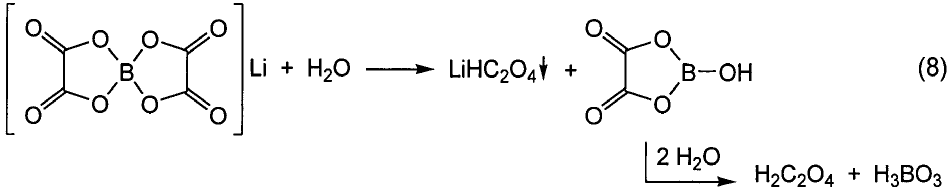

Die bei der Hydrolyse von fluorhaltigen Leitsalzen gebildeten gasförmigen Produkte, beispielsweise HF und POF₃ sind stark ätzend und schädlich für die sonstigen Batteriekomponenten, beispielsweise die Kathodenmaterialien. So führt HF beispielsweise zur Auflösung von Manganspinellen und zerstört die für die lange Lebensdauer wichtige Deckschicht auf den Elektrodenmaterialien. Infolgedessen wird die Zyklenstabilität sekundärer Batterien beeinträchtigt. Auch Boratelektrolyte sind gegen Wasser empfindlich. In diesem Fall bilden sich teilweise unlösliche Hydrolyseprodukte, die ebenfalls die Funktionseigenschaften der Batterien beeinträchtigen. Die Hydrolyseprodukte wie Borsäure oder Oxalsäure sind sauer-korrosiv und beeinträchtigen in ähnlicher Weise die Deckschichtbildung auf den Kathoden- bzw. Anodenmaterialien.

Es ist deshalb unbedingt angezeigt, Produkte mit möglichst niedrigen Wasser- und Säuregehalten für die Herstellung von Batterieelektrolyten zu verwenden, falls langzeitzyklenstabile Batterien erwünscht sind.

Die Entfernung von Wasser und/oder Säuren kann auf der Stufe der Flüssigelektrolyten erfolgen. DE-A-10049097 offenbart, Wasser und protische Verunreinigungen aus einem organischen Flüssigelektrolyten durch Kontaktierung mit unlöslichen Alkalimetallhydriden und Abtrennung der unlöslichen Reaktionsnebenprodukte abzutrennen. Nachteil des beschriebenen Verfahrens ist, dass die Trocknungszeiten relativ lang und die aufzuwendenden Mengen an Trocknungsmittel sehr hoch sind; so werden ca. 0,4 bis 6 g Lithiumhydrid pro kg Elektrolytlösung, das sind etwa 2 bis 25 g pro kg Lithiumboratsalz-Inhalt, eingesetzt.

Um den Reinigungsaufwand am Ende des Elektrolyt-Herstellprozesses möglichst niedrig zu halten, ist es notwendig, ein bereits weitgehend trockenes und säurefreies Lithiumboratsalz einzusetzen.

Aufgabe der vorliegenden Erfindung ist es, ein einfaches, kostengünstiges Verfahren zur Herstellung wasser- und säurefreier (bzw. -armer) fester Lithiumboratsalze und deren Lösungen in aprotischen organischen Lösungsmitteln aufzuzeigen.

Die Erfindung betrifft Gemische aus Lithiumboratrohsalzen, Lithiumhydrid und einem aprotischen, das Lithiumboratsalz nicht lösenden Lösungsmittel oder Lösunsgmittelgemisch, wobei die Konzentration des Lithiumhydrids, bezogen auf die Gewichtsmenge Lithiumboratrohsalz mindestens 0,001 und maximal 10 Gew.-% und die Konzentration der gelösten und ungelösten Feststoffe im Lösungsmittel in Summe mindestens 5 und maximal 95 % beträgt und der Wassergehalt maximal 100 µmol/g sowie der Säuregehalt maximal 10 µmol H+/g Lithiumboratrohsalz betragen.

Die Erfindung betrifft gleichfalls lösungsmittelfreie Gemische aus Lithiumboratrohsalzen und Lithiumhydrid, wobei der Gewichtsanteil des Lithiumhydrids mindestens 0,001 und maximal 10 Gew.-% und der Wassergehalt maximal 100 µmol/g sowie der Säuregehalt maximal 10 µmol H+/g Lithiumboratrohsalz betragen.

Die Aufgabe wird überraschenderweise dadurch gelöst, dass wasser- und/oder säureverunreinigte Lithiumboratrohsalze, nachfolgend kurz Lithiumboratrohsalz genannt, in fester Phase oder suspendiert in einem das Lithiumboratrohsalz nicht lösenden Lösemittel mit Lithiumhydrid gemischt und bei vorzugsweise erhöhter Temperatur miteinander gerührt werden.

Vorzugsweise erfolgt diese Behandlung entweder im Vakuum oder in trockener Atmosphäre, ganz besonders bevorzugt in Inertgasatmosphäre. Als Lithiumboratsalze werden die durch die generischen Formeln I und II dargestellten Verbindungen verwendet: 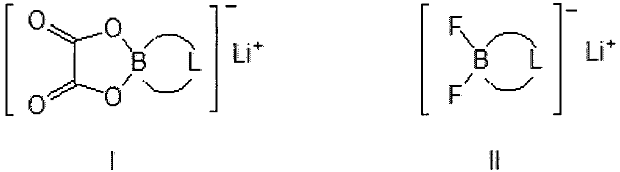 L ist ein Chelatbildner mit zwei endständigen Sauerstoffatomen mit der allgemeinen Formel 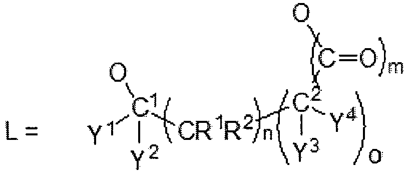 wobei
- Y¹ und Y² bedeuten zusammen = O, mit m = 0 oder 1, n = 0 oder 1, o = 0 und R¹ und R² unabhängig voneinander H, F, Cl, Br, OR (R = Alkyl) oder R' (Alkyl), oder
- Y¹, Y², Y³, Y⁴ bedeuten jeweils unabhängig voneinander OR (R = Alkyl), H, F, Cl, Br, R' (Alkyl), mit m = 0 oder 1, n = 0, o = 1, oder
- Y¹, C¹, Y³ und C² sind Glieder eines 5-oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei Y² und Y⁴ entfallen, mit n = 0 und m = 0 oder 1, o = 1

Besonders bevorzugt sind: Lithiumbis(oxalato)borat (LiBOB), Lithiummalonato-oxalatoborat (LiMOB), Lithiumglykolato-oxalatoborat (LiGOB), Lithiumsalicylato-oxalatoborat (LiSOB), Lithiumlactato-oxalatoborat (LiLOB), Lithiumbrenzcatechinatooxalatoborat (LiBZOB), Lithium-difluorooxalatoborat (LiDFOB), Lithiumdifluoromalonatoborat, Lithiumdifluoro-glykolatoborat, Lithiumdifluorosalicylatoborat, Lithiumdifluorolactatoborat, Lithiumdifluoro-brenzcatechinatoborat.

Das Lithiumhydrid wird besonders bevorzugt in feinverteilter Form, also gemahlen, eingesetzt. Die mittlere Partikelgröße D₅₀ liegt bevorzugt bei 100 µm oder darunter.

Es wurde überraschend gefunden, dass das Reduktionsmittel LiH selbst bei hohen Temperaturen nicht mit dem Lithiumboratsalz reagiert.

Dies wird beispielhaft am Verhalten eines speziellen Lithiumboratsalzes der Struktur I, dem Lithiumbis(oxalato)borat (LiBOB) gezeigt. In der folgenden Grafik werden die thermische Stabilität von reinem, jedoch mit ca. 0,2 % Wasser verunreinigtem LiBOB, LiBOB Monohydrat und LiBOB (0,2 % Wasser), das mit 5 Gew.-% gemahlenem LiH vermengt wurde, gezeigt. Die Experimente wurden in geschlossenen Stahlgefäßen mit etwa 5 ml Volumen durchgeführt.

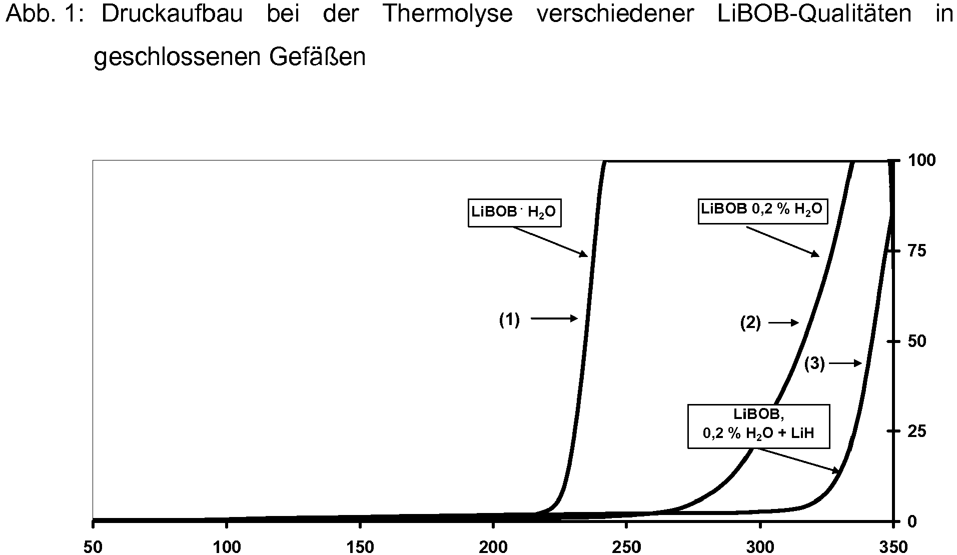

LiBOB zersetzt sich thermisch unter Bildung von Gasen gemäß: 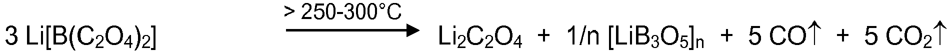 wodurch sich in geschlossenen Apparaturen ein entsprechender Druckaufbau ergibt. In Anwesenheit von Wasser wird der Zersetzungsprozess beschleunigt. Der Druckanstiegsverlauf in geschlossenen Gefäßen spiegelt deshalb den Verlauf der thermischen Zersetzung des Lithiumboratsalzes wider. Den obigen Kurven kann entnommen werden, dass sich LiBOB Monohydrat bei niedrigster Temperatur (ca. 230 °C) zersetzt. Leicht wasserverunreinigtes LiBOB beginnt oberhalb etwa 270 °C Druck aufzubauen.

In Abmischung mit Lithiumhydrid beginnt die Zersetzung aber unerwartet erst bei 50 bis 60 °C höheren Temperaturen. Die erwartete Reduktion der Carbonylgruppen durch das Hydrid findet überraschend nicht statt. Auch werden durch verschiedene Analysenmethoden (Ionenchromatographie, NMR-Spektroskopie u.a.) keine Substanzen identifiziert, die auf einen Angriff von LiH auf das BOB-Anion hindeuten könnten.

Die Abmischung von Lithiumboratsalz und Lithiumhydrid kann in reiner Form oder unter Zusatz eines aprotischen, das Lithiumboratsalz nicht lösenden Lösemittels oder Lösemittelgemisches mit einem Siedepunkt bzw. -bereich von mindestens 100 °C bei Normaldruck (im folgenden aprotisches Lösungsmittel genannt) erfolgen. Das aprotische Lösungsmittel siedet bevorzugt im Bereich zwischen 110 und 280 °C. Geeignete aprotische Lösungsmittel sind aromatische oder gesättigte Kohlenwasserstoffe, per- oder teilfluorierte Kohlenwasserstoffe oder Dialkylether. Beispiele für aromatische Kohlenwasserstoffe sind: Toluol, Ethylbenzol, Xylole, Cumol, Beispiele für gesättigte Kohlenwasserstoffe: Heptan, Octan, Nonan, Dekan, Undekan und Dodekan sowie Mischungen daraus. Ganz besonders geeignet sind auch kommerziell erhältliche Kohlenwasserstoffgemische wie z. B. Shellsol D70 oder D100 oder Halpasole. Beispiele für Fluorkohlenwasserstoffe sind: Perfluoro(methyldecalin), Perfluorononan, Perfluorooktan, Perfluorotridecan, Perfluorodekalin oder kommerziell erhältliche Perfluorkohlenstoffgemische wie Perfluorkerosin mit einem Siedebereich zwischen 210 und 240 °C.

Ferner eignen sich hochsiedende Dialkylether wie Dibutylether, Diamylether oder Diphenylether oder Mischungen daraus.

Die Menge an einzusetzendem Lithiumhydrid richtet sich nach der Konzentration an protischen Verunreinigungen im Lithiumboratrohsalz. Im Allgemeinen sind mind. 0,001 Gew.-% und maximal 10 Gew.-% bezogen auf die eingesetzte Gewichtsmenge Lithiumboratsalz einzusetzen. Die bevorzugte LiH-Menge liegt zwischen 0,01 und 1 Gew. %.

Die Umsetzung zwischen Lithiumboratsalz und Lithiumhydrid in Abwesenheit eines aprotischen Lösemittels oder Lösungsmittelgemisches erfolgt unter Inertgasatmosphäre oder im Vakuum bei Temperaturen zwischen 40 und 280 °C, besonders bevorzugt bei Drücken kleiner als 50 mbar und bei Temperaturen zwischen 110 und 220 °C. Die Reaktionsdauer liegt zwischen 10 min und 24 Stunden, bevorzugt 0,5 bis 10 Stunden.

In Anwesenheit eines das Lithiumboratsalz nicht lösenden aprotischen Lösemittels erfolgt die Trocknung und Entsäuerung bevorzugt bei einer Temperatur, bei der das Lösungsmittel siedet. Der Siedevorgang bewirkt über Kavitationseffekte eine Beschleunigung des Trocknungsvorganges. Des weiteren bilden die für das erfindungsgemäße Verfahren eingesetzten aprotischen Lösungsmittel mit Wasser azeotrope Gemische, d. h. vorhandenes Wasser bildet mit dem Lösungsmittel ein niedrig siedendes Gemisch.

Im Kondensat entmischen sich Wasser und aprotisches Lösungsmittel. Durch geeignete apparative Vorrichtungen nach Stand der Technik kann die Wasserphase abgeschieden und bewirkt werden, dass nur das aprotische Lösungsmittel in die Lithiumboratsalz/ LiH/aprotisches Lösungsmittel-Mischung zurückläuft. Auf diese Art und Weise kann eine ganz besonders effiziente Trocknung erfolgen.

Die notwendigen Trocknungszeiten in Anwesenheit eines aprotischen, das Lithiumboratsalz nicht lösenden Lösemittels sind von der Trocknungstemperatur, der eingesetzten Lithiumhydridmenge u.a. abhängig. Die Konzentration des Lithiumhydrids, bezogen auf die Gewichtsmenge Lithiumboratrohsalz beträgt mindestens 0,001 und maximal 10 Gew.-% und die Konzentration der Feststoffe (also Lithiumboratsalz und Lithiumhydrid) im Lösungsmittel in Summe mindestens 5 und maximal 95 %.

Wird die Trocknung im bevorzugten Temperaturbereich zwischen 110 und 220 °C vorgenommen, so sind im Allgemeinen 0,5 bis 10 h ausreichend bemessen.

Nach Beendigung des Trocknungs- und Entsäuerungsvorganges wird das aprotische Lösungsmittel von der Lithiumboratsalz/Lithiumhydridmischung entfernt. Dies kann entweder über eine mechanische Fest/Flüssig-Trennoperation, z. B. Filtrieren oder Dekantieren oder alternativ durch Totaleindampfung erfolgen. Bei der Totaleindampfung wird das Kondensat nicht in den Destillationsbehälter zurückgeführt, sondern aus der Destillationsapparatur ausgeschleust. Dieser Vorgang kann bei Normaldruck oder bei vermindertem Druck erfolgen. Es ist besonders bevorzugt, für die Schlusstrocknung den Druck abzusenken. Bevorzugt liegt der Schlussdruck bei kleiner als 100 mbar. Auf diese Weise lässt sich das aprotische Lösungsmittel besonders vollständig von der Lithiumboratsalz/LiH-Mischung entfernen.

Nach der Trocknungs- und Entsäuerungsaktion liegen Feststoffgemische vor, die mit überschüssigem Lithiumhydrid sowie dessen Reaktionsprodukten (LiOH, Li₂CO₃, Li₂C₂O₄) verunreinigt sind. Sie enthalten maximal 100 µmol Wasser und maximal 10 µmol H⁺ pro g Lithiumboratrohsalz. Da solche Gemische nicht direkt als Leitsalze für Lithiumbatterien einsetzbar sind, besteht eine weitere Aufgabenstellung darin, die genannten Verunreinigungen vom Lithiumboratsalz abzutrennen. Dies geschieht am einfachsten durch einen selektiven Lösevorgang. Während nämlich die Lithiumboratsalze in der Regel eine hohe Löslichkeit in vielen aprotischen, polaren Lösungsmitteln aufweisen, sind die Verunreinigungen in denselben Lösungsmitteln kaum oder gar nicht löslich.

Dazu wird das erfindungsgemäß getrocknete und entsäuerte Lithiumboratrohsalz, im folgenden einfach erfindungsgemäßes Rohsalz genannt, in Kontakt mit einem das Rohsalz gut lösenden ebenfalls aprotischen wasser- und säurefreien Lösungsmittel oder Lösungsmittelgemisch gebracht. Als solches Rohsalz-lösende aprotische Lösemittel eignen sich Ether, Ketone, Kohlensäureester, γ-Lactone, Carbonsäureester und Nitrile, entweder in reiner Form oder in Mischung untereinander oder in Abmischung mit einem Kohlenwasserstoff, z.B. Toluol, Ethylbenzol oder Methylcyclohexan. Ganz besonders geeignet sind Kohlensäureester, insbesondere zyklische Carbonate wie Ethylencarbonat (EC), Propylencarbonat (PC), Butylencarbonat (BC) u. dgl., Nitrile wie Acetonitril und Propionitril sowie γ-Lactone wie γ-Butyrolacton und γ-Valerolacton.

Je nach individueller Löslichkeit beträgt die Konzentration des gelösten Lithiumboratrohsalzes 1 bis 50 %, bevorzugt 5 bis 30 %. Es wurde gefunden, dass die Verunreinigung mit Wasser maximal 100 µmol/g sowie mit Säur en (H⁺)max 10 µmol/g gelöstem Lithiumboratrohsalz beträgt.

Das erfindungsgemäße Verfahren wird nachfolgend beispielhaft erläutert, ohne dass mit der Beschreibung eine Limitierung auf ein ganz bestimmtes Lithiumboratrohsalz oder ein bestimmtes Verfahren erfolgen soll.

Als Repräsentant für ein Lithiumboratsalz wird LiBOB verwendet. Nach Stand der Technik hergestelltes rohes LiBOB enthält typisch 0,1 bis 0,2 % Wasser und einen relativ hohen Säuregehalt von >100 µmol/g. Der Säuregehalt wird nach einer speziellen Methode im wasserfreien Medium titriert (Titration mit tertiären Aminen gegen Bromphenolblau als Indikator).

Das rohe LiBOB wird mit bevorzugt 0,1 bis 0,5 % Lithiumhydridpulver versetzt und dann unter intensiver Durchmischung erhitzt. Besonders bevorzugt erfolgt dieser Vorgang in Gegenwart von aliphatischen Kohlenwasserstoffen mit einem Siedebereich zwischen 110 und 280 °C bei Temperaturen zwischen 110 und 220 °C. Das aus diesem Prozess entweder durch Totaleindampfung oder durch einen Fest/Flüssig-Trennprozess isolierte getrocknete und entsäuerte Rohsalz wird sodann unter Ausschluss von Luft und Wasser, d. h. im Vakuum oder unter Inertgasatmosphäre in ein LiBOB gut lösendes aprotisches Lösungsmittel, bevorzugt Ethylencarbonat, Propylencarbonat oder Butylencarbonat eingetragen, so dass eine ca. 10 bis 20%ige Lösung entsteht. Durch Rühren und/oder Erwärmen kann der Lösungsprozess beschleunigt werden. Im gerührten System ist der Löseprozess nach einigen Minuten bis ca. 5 Stunden abgeschlossen.

In einer besonderen Ausgestaltung des erfindungsgemäßen Verfahrens wird die ungelöste Rückstände enthaltende Rohsalzlösung anschließend bei erhöhten Temperaturen, z. B. bei 50 bis 200 °C für etwa 10 min bis 10 Stunden gerührt. Durch diese Maßnahme werden eventuell noch vorhandene Wasser- und Säurespuren, die mit dem aprotischen Lösemittel und/oder dem Lithiumboratrohsalz eingebracht wurden, entfernt bzw. neutralisiert.

Die wie oben beschrieben behandelte trübe Lösung wird anschließend zur Abtrennung der Trübe nach Stand der Technik filtriert, dekantiert oder zentrifugiert. Ganz besonders bevorzugt ist die Membranfiltration unter Verwendung von Filtermedien mit Porendurchmessern kleiner als 0,5 µm.

Werden für das beschriebene Reinigungsverfahren solche Lösungsmittel verwendet, die in Lithiumbatterien eingesetzt werden, sind im Allgemeinen keine weiteren Reinigungs- und Trennoperationen mehr notwendig.

Die Produktlösung kann in dieser Form mit weiteren Komponenten, also Lösungsmitteln, Lithiumsalzen (z. B. LiPF₆) oder speziellen Additiven (z. B. schichtbildenden Substanzen wie Vinylencarbonat oder Redox-Shuttle-Molekülen wie z. B. 1,2-Divinylfuroat, 1,3-Butadiencarbonat oder 2-tert-Butylanisol) versetzt und dann als Batterieelektrolyt eingesetzt werden. Anders sieht es aus, wenn in Batterien wenig gebräuchliche Lösungsmittel wie z. B. Acetonitril oder Essigsäurebutylester für den Abtrennprozess verwendet werden.

In diesem Falle muss das Lösungsmittel entweder per Totaleindampfung entfernt oder das gelöste Lithiumboratsalz per Kristallisation (Verdrängungs-, Eindampf- oder Kühlkristallisation) isoliert werden.

Es wurde gefunden, dass auch die aus den wasser- und säurefreien Lösungen isolierten festen Lithiumboratprodukte mit deutlich geringeren Wasser- und Säuregehalten anfallen, als dies dann der Fall ist, wenn nicht erfindungsgemäß vorbehandelte Lithiumboratrohsalze eingesetzt werden. Die verschiedenen Aspekte der Erfindung werden anhand nachstehender Beispiele erläutert, ohne dass eine Beschränkung darauf erfolgen soll.

### Beispiel 1: Trocknung und Entsäuerung von LiBOB mit Lithiumhydrid in Halpasol unter Rückflussbedingungen

In einem 5-1-Vertikaltrockner mit Rückflussteiler, Kondensator und Ablassmöglichkeit für die wässrige Phase im Kondensat wurden 1,18 kg rohes LiBOB mit einem Wassergehalt von 800 ppm sowie 1,9 g LiH-Pulver in 2,9 kg "Halpasol 166-170" suspendiert. Die Wärmeträgeröltemperatur wurde auf 205 °C eingestellt und 1 h rückflussgekocht (Siedetemperatur 165 bis 167 °C). Dabei schieden sich 0,5 ml Wasser ab. Nach weiteren 1,5 h Refluxieren wurde der Rückflussteiler von Rückfluss auf Destillation umgestellt.

Nachdem die Hauptmenge des Lösungsmittels abkondensiert war, wurde der Druck allmählich, zum Schluss auf 15 mbar abgesenkt.

Das zurückbleibende farblose, trockene Kristallisat wurde in noch heißem Zustand in eine inertisierte d. h. getrocknete und mit Schutzgas befüllte Glasflasche abgelassen.

| | |
|---|---|
| Ausbeute: | 1,16 kg LiBOB |
| Säuregehalt: | 2,5 µmol H⁺/g LiBOB (Titration mit Triethylamin gegen Bromphenolblau in Propylencarbonat-Lösung) |
| Wassergehalt: | 219 ppm (entspr. 12 µmol/g LiBOB) |
| Unlösl. Anteil: | 1,3 Gew.-% (in Acetonitril) |

### Beispiel 2: Herstellung einer klaren, trockenen und säurearmen Lösung von LiBOB in Propylencarbonat (PC)

263 g LiBOB/LiH-Mischung aus Beispiel 1 wurden in 1380 g trockenes PC (Wassergehalt 30 ppm), das in einem inertisierten 2 I Doppelmantelreaktor vorgelegt war, eingetragen. Dann wurde die gerührte trübe Mischung 3 Stunden bei 120 °C unter einem Argonpolster gerührt. Nach Abkühlung auf Raumtemperatur wurde die Lösung über ein Membranfilter der Fa. Cuno (SCF Nylon, 100 nm Porenweite) filtriert.

| | |
|---|---|
| Auswaage: | 1429 g (87 % d. Th.), klare, gelbliche Lösung. Die Lösung erweist sich als lagerstabil, d. h. es treten beim Lagern über mehrere Monate keine Nachfällungen auf. |
| Li⁺: | 0,81 mmol/g (entspr. 15,7 % LiBOB) |
| Säuregehalt: | 2,0 µmol H⁺/g LiBOB-Inhalt |
| Wassergehalt: | 235 ppm (entspr. 82 µmol/g LiBOB-Inhalt) |

### Beispiel 3: Herstellung von reinem, wasser- und säurearmem LiBOB-Kristallisat durch Eindampfkristallisation in Propylencarbonat

1186 g der klaren LiBOB-Lösung aus Beispiel 2 wurden in einem 0,5-I-Doppelmantelreaktor ausgerüstet mit Schrägblattrührer, Destillatteiler und Intensivkühler kristallisiert.

Dazu wurden zunächst 500 ml der klaren Lösung in den zuvor getrockneten und mit Argon befüllten Reaktor eingebracht. Dann wurde auf einen Druck von 10 mbar evakuiert und die Heizmanteltemperatur innerhalb von 60 min auf 150 bis 155 °C eingestellt. Unter diesen Bedingungen siedete der Reaktorinhalt und das ausgeschleuste Destillat wurde kontinuierlich durch weitere Frischlösung ersetzt. Es wurden insgesamt 971 g PC abkondensiert. Dass wurde das Vakuum gebrochen, auf 120 °C abgekühlt und die entstandene Suspension auf eine auf 100 °C vorgeheizte Umkehrfritte abgelassen. Nach Entfernung der Mutterlauge wurde das Kristallisat mit insgesamt 950 g Diethylcarbonat gewaschen.

Anschließend wurde der Feststoff mit Argon trocken geblasen und bei 100 °C vakuumgetrocknet.

| | |
|---|---|
| Ausbeute: | 124 g weißes grobkristallines Salz (67 % d. Th.) |
| Li⁺: | 5,25 mmol/g |
| Säuregehalt: | 5,7 µmol H⁺/g LiBOB |
| Wassergehalt: | 81 ppm (entspr. 4 µmol/g LiBOB) |

Das Produkt löste sich ganz schwach trübe in PC und Acetonitril (kleiner als 100 NTU).

## Patentansprüche

1. Gemische aus Lithiumboratrohsalzen, Lithiumhydrid und einem aprotischen, das Lithiumboratsalz nicht lösenden Lösungsmittel oder Lösungsmittelgemisch, wobei die Konzentration des Lithiumhydrids, bezogen auf die Gewichtsmenge Lithiumboratrohsalz mindestens 0,001 und maximal 10 Gew.-% und die Konzentration der gelösten und ungelösten Feststoffe im Lösungsmittel in Summe mindestens 5 und maximal 95 % beträgt und der Wassergehalt maximal 100 µmol/g sowie der Säuregehalt maximal 10 µmol H⁺/g Lithiumboratrohsalz betragen.

2. Gemische nach Anspruch 1, **dadurch gekennzeichnet, dass** das Lithiumhydrid in Pulverform mit einer mittleren Partikelgröße von höchstens 100 µm vorliegt.

3. Gemische nach Anspruch 1 oder 2, **dadurch gekennzeichnet, dass** Lithiumboratrohsalze gemäß allgemeiner Formel I oder Formel II 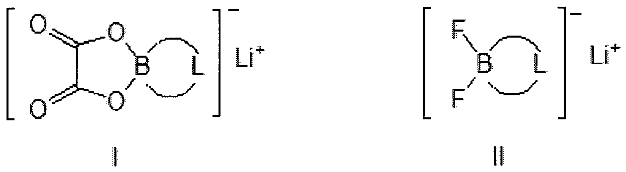 verwendet werden, wobei L ein Chelatbildner mit zwei endständigen Sauerstoffatomen mit der allgemeinen Formel 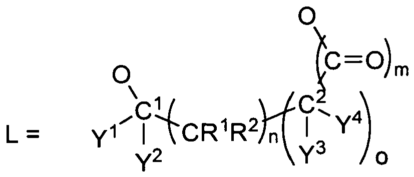 ist und wobei
• Y¹ und Y² bedeuten zusammen = O, mit m = 0 oder 1, n = 0 oder 1, o = 0 und R¹ und R² unabhängig voneinander H, F, Cl, Br, OR (R = Alkyl) oder R' (Alkyl), oder
• Y¹, Y², Y³, Y⁴ bedeuten jeweils unabhängig voneinander OR (R = Alkyl), H, F, Cl, Br, R' (Alkyl), mit m = 0 oder 1, n = 0, o = 1, oder
• Y¹, C¹, Y³ und C² sind Glieder eines 5-oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei Y² und Y⁴ entfallen, mit n = 0 und m = 0 oder 1, o = 1

4. Gemische nach einem oder mehreren der Ansprüchen 1 bis 3, **dadurch gekennzeichnet, dass** das Lithiumboratrohsalz ausgewählt ist aus der Gruppe Lithiumbis(oxalato)borat (LiBOB), Lithiummalonato-oxalatoborat (LiMOB), Lithiumglykolato-oxalatoborat (LiGOB), Lithiumsalicylato-oxalatoborat (LiSOB), Lithiumlactato-oxalatoborat (LiLOB), Lithiumbrenzcatechinato-oxalatoborat (LiBZOB), Lithium-difluorooxalatoborat (LiDFOB), Lithiumdifluoromalonatoborat, Lithiumdifluoroglykolatoborat, Lithiumdifluorosalicylatoborat, Lithiumdifluorolactatoborat, Lithiumdifluoro-brenzcatechinatoborat.

5. Gemische nach einem oder mehreren der Ansprüche 1 bis 4, **dadurch gekennzeichnet, dass** das aprotische Lösungsmittel oder Lösungsmittelgemisch aromatische oder gesättigte Kohlenwasserstoffe, per- oder teilfluorierte Kohlenwasserstoffe oder Dialkylether enthält oder aus diesen ausgewählt ist.

6. Lösungsmittelfreie Gemische aus Lithiumboratrohsalzen und Lithiumhydrid, wobei der Gewichtsanteil des Lithiumhydrids mindestens 0,001 und maximal 10 Gew.-% und der Wassergehalt maximal 100 µmol/g sowie der Säuregehalt maximal 10 µmol H⁺/g Lithiumboratrohsalz betragen.

7. Lösungsmittelfreie Gemische nach Anspruch 6, **dadurch gekennzeichnet, dass** das Lithiumhydrid in Pulverform mit einer mittleren Partikelgröße von höchstens 100 µm vorliegt.

8. Lösungsmittelfreie Gemische nach Anspruch 6 oder 7, **dadurch gekennzeichnet, dass** Lithiumboratrohsalze gemäß allgemeiner Formel I oder Formel II 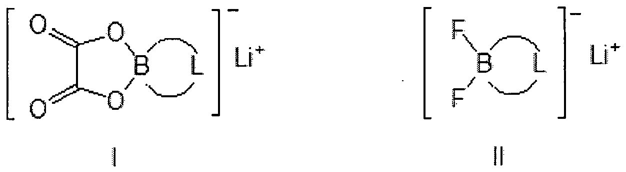 verwendet werden, wobei L ein Chelatbildner mit zwei endständigen Sauerstoffatomen mit der allgemeinen Formel 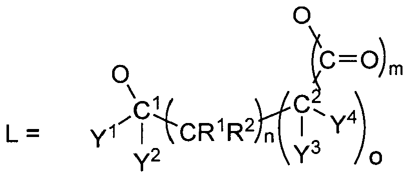 ist und wobei
• Y¹ und Y² bedeuten zusammen = O, mit m = 0 oder 1, n = 0 oder 1, o = 0 und R¹ und R² unabhängig voneinander H, F, Cl, Br, OR (R = Alkyl) oder R' (Alkyl), oder
• Y¹, Y², Y³, Y⁴ bedeuten jeweils unabhängig voneinander OR (R = Alkyl), H, F, Cl, Br, R' (Alkyl), mit m = 0 oder 1, n = 0, o = 1, oder
• Y¹, C¹, Y³ und C² sind Glieder eines 5-oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei Y² und Y⁴ entfallen, mit n = 0 und m = 0 oder 1, o = 1

9. Lösungsmittelfreie Gemische nach einem oder mehreren der Ansprüche 6 bis 8, **dadurch gekennzeichnet, dass** das Lithiumboratrohsalz ausgewählt ist aus der Gruppe Lithiumbis(oxalato)borat (LiBOB), Lithiummalonato-oxalatoborat (LiMOB), Lithiumglykolato-oxalatoborat (LiGOB), Lithiumsalicylato-oxalatoborat (LiSOB), Lithiumlactato-oxalatoborat (LiLOB), Lithiumbrenzcatechinatooxalatoborat (LiBZOB), Lithium-difluorooxalatoborat (LiDFOB), Lithiumdifluoromalonatoborat, Lithiumdifluoroglykolatoborat, Lithiumdifluorosalicylatoborat, Lithiumdifluorolactatoborat, Lithiumdifluorobrenzcatechinatoborat.

10. Verfahren zur Herstellung eines Gemisches aus Lithiumboratrohsalzen, Lithiumhydrid und einem aprotischen, das Lithiumboratsalz nicht lösenden Lösungsmittel oder Lösungsmittelgemisch gemäß Anspruch 1, **dadurch gekennzeichnet, dass** ein Lithiumboratrohsalz in fester Phase oder in Suspension mit einem das Lithiumboratsalz nicht lösenden aprotischen Lösungsmittel oder Lösungsmittelgemisch sowie Lithiumhydrid in Kontakt gebracht und in geeigneter Weise gerührt oder anders gemischt wird, so dass die protischen Verunreinigungen ganz oder teilweise zu neutralen und/oder unlöslichen Produkten abreagieren.

11. Verfahren zur Herstellung eines lösungsmittelfreien Gemisches aus Lithiumboratrohsalzen und Lithiumhydrid gemäß Anspruch 6, **dadurch gekennzeichnet, dass** die Verfahrensschritte nach Anspruch 10 durchgeführt werden und anschließend das aprotische, das Lithiumboratsalz nicht lösende Lösungsmittel entweder durch Destillation oder mechanische Fest/Flüssig-Trennung von der Mischung aus Lithiumboratsalz und Lithiumhydrid entfernt wird.

12. Verfahren zur Herstellung einer Lösung eines Lithiumboratsalzes, **dadurch gekennzeichnet, dass** ein Lithiumboratrohsalz-haltiger Stoff gemäß Anspruch 6 in Kontakt mit einem das Lithiumboratrohsalz lösenden Lösungsmittel oder Lösungsmittelgemisch gebracht wird und das Lithiumboratrohsalz darin gelöst wird.

13. Verfahren nach Anspruch 12, **dadurch gekennzeichnet, dass** als Lithiumboratrohsalze solche der allgemeinen Formel I oder Formel II 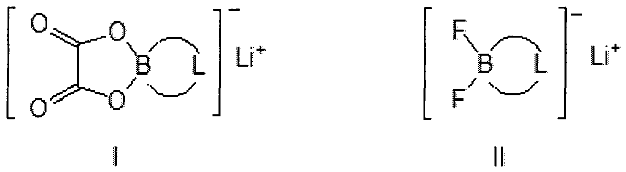 verwendet werden, wobei L ein Chelatbildner mit zwei endständigen Sauerstoffatomen mit der allgemeinen Formel 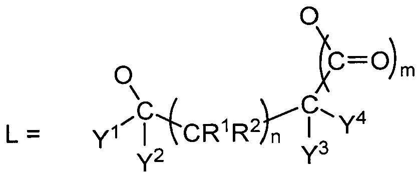 ist und wobei
■ Y¹ und Y² bedeuten zusammen = O, mit m = 0 oder 1, n = 0 oder 1, o = 0 und R¹ und R² unabhängig voneinander H, F, Cl, Br, OR (R = Alkyl) oder R' (Alkyl), oder
■ Y¹, Y², Y³, Y⁴ bedeuten jeweils unabhängig voneinander OR (R = Alkyl), H, F, Cl, Br, R' (Alkyl), mit m = 0 oder 1, n = 0, o = 1, oder
■ Y¹, C¹, Y³ und C² sind Glieder eines 5- oder 6-gliedrigen aromatischen oder heteroaromatischen Ringes (mit N, O oder S als Heteroelement), der gegebenenfalls mit Alkyl, Alkoxy, Carboxy oder Nitril substituiert sein kann, wobei Y² und Y⁴ entfallen, mit n = 0 und m = 0 oder 1, o = 1.

14. Verfahren nach Anspruch 12 oder 13, **dadurch gekennzeichnet, dass** das, das Lithiumboratrohsalz lösende aprotische Lösungsmittel Ether, Ketone Kohlensäureester, Carbonsäureester, γ-Lactone und/oder Nitrile enthält oder daraus besteht.

## Claims

1. Mixtures of crude lithium borate salts, lithium hydride and an aprotic solvent or solvent blend which does not dissolve the lithium borate salt, wherein the concentration of lithium hydride, relative to the weight of crude lithium borate salt, is at least 0.001 and at most 10 wt.% and the concentration of dissolved and undissolved solids in the solvent is at least 5 and at most 95% in total and the water content is at most 100 µmol/g and the acid content is at most 10 µmol H⁺/g of crude lithium borate salt.

2. Mixtures according to claim 1, **characterised in that** the lithium hydride is present in powder form with an average particle size of at most 100 *µ*m.

3. Mixtures according to claim 1 or 2, **characterised in that** crude lithium borate salts according to general formula I or formula II 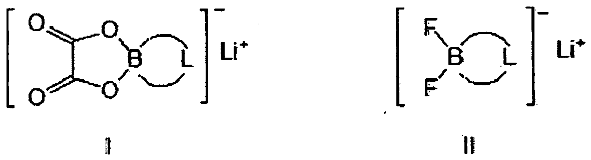 are used, wherein L is a chelating agent having two terminal oxygen atoms with the general formula 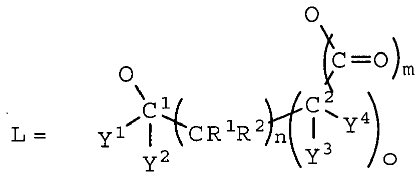 and wherein
• Y¹ and Y² together denote =O, where m = 0 or 1, n = 0 or 1, o = 0 and R¹ and R² independently of one another denote H, F, Cl, Br, OR (R = alkyl) or R' (alkyl), or
• Y¹, Y², Y³, Y⁴ independently of one another each denote OR (R = alkyl), H, F, Cl, Br, R' (alkyl), where m = 0 or 1, n = 0, o = 1, or
• Y¹, C¹, Y³ and C² are members of a 5- or 6-membered aromatic or heteroaromatic ring (with N, O or S as heteroelement), which can optionally be substituted with alkyl, alkoxy, carboxy or nitrile, wherein Y² and Y⁴ are omitted, with n = 0 and m = 0 or 1, o = 1.

4. Mixtures according to one or more of claims 1 to 3, **characterised in that** the crude lithium borate salt is selected from the group lithium bis(oxalato)borate (LiBOB), lithium malonato-oxalatoborate (LiMOB), lithium glycolato-oxalatoborate (LiGOB), lithium salicylato-oxalatoborate (LiSOB), lithium lactato-oxalatoborate (LiLOB), lithium catecholato-oxalatoborate (LiBZOB), lithium difluorooxalatoborate (LiDFOB), lithium difluoromalonatoborate, lithium difluoroglycolatoborate, lithium difluorosalicylatoborate, lithium difluorolactatoborate, lithium difluorocatecholatoborate.

5. Mixtures according to one or more of claims 1 to 4, **characterised in that** the aprotic solvent or solvent blend contains aromatic or saturated hydrocarbons, perfluorinated or partially fluorinated hydrocarbons or dialkyl ethers or is selected from these.

6. Solvent-free mixtures of crude lithium borate salts and lithium hydride, wherein the percentage by weight of lithium hydride is at least 0.001 and at most 10 wt.% and the water content is at most 100 µmol/g and the acid content is at most 10 µmol H⁺/g of crude lithium borate salt.

7. Solvent-free mixtures according to claim 6, **characterised in that** the lithium hydride is present in powder form with an average particle size of at most 100 *µ*m.

8. Solvent-free mixtures according to claim 6 or 7, **characterised in that** crude lithium borate salts according to general formula I or formula II 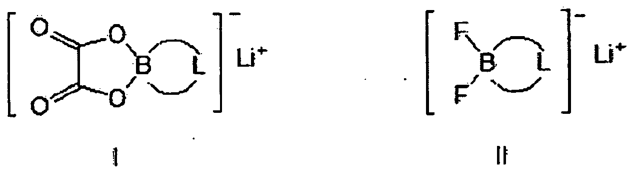 are used, wherein L is a chelating agent having two terminal oxygen atoms with the general formula 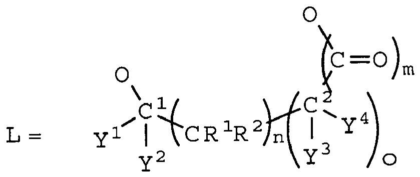 and wherein
• Y¹ and Y² together denote =O, where m = 0 or 1, n = 0 or 1, o = 0 and R¹ and R² independently of one another denote H, F, Cl, Br, OR (R = alkyl) or R' (alkyl), or
• Y¹, Y², Y³, Y⁴ independently of one another each denote OR (R = alkyl), H, F, Cl, Br, R' (alkyl), where m = 0 or 1, n = 0, o = 1, or
• Y¹, C¹, Y³ and C² are members of a 5- or 6-membered aromatic or heteroaromatic ring (with N, O or S as heteroelement), which can optionally be substituted with alkyl, alkoxy, carboxy or nitrile, wherein Y² and Y⁴ are omitted, with n = 0 and m = 0 or 1, o = 1.

9. Solvent-free mixtures according to one or more of claims 6 to 8, **characterised in that** the crude lithium borate salt is selected from the group lithium bis(oxalato)borate (LiBOB), lithium malonato-oxalatoborate (LiMOB), lithium glycolato-oxalatoborate (LiGOB), lithium salicylato-oxalatoborate (LiSOB), lithium lactato-oxalatoborate (LiLOB), lithium catecholato-oxalatoborate (LiBZOB), lithium difluorooxalatoborate (LiDFOB), lithium difluoromalonatoborate, lithium difluoroglycolatoborate, lithium difluorosalicylatoborate, lithium difluorolactatoborate, lithium difluorocatecholatoborate.

10. A process for producing a mixture of crude lithium borate salts, lithium hydride and an aprotic solvent or solvent blend which does not dissolve the lithium borate salt according to claim 1, **characterised in that** a crude lithium borate salt in the solid phase or in suspension is brought into contact with an aprotic solvent or solvent blend which does not dissolve the lithium borate salt and lithium hydride, and stirred or otherwise mixed in an appropriate way so that all or some of the protic contaminants react to form neutral and/or insoluble products.

11. A process for producing a solvent-free mixture of crude lithium borate salts and lithium hydride according to claim 6, **characterised in that** the process steps according to claim 10 are performed and then the aprotic solvent which does not dissolve the lithium borate salt is removed from the mixture of lithium borate salt and lithium hydride either by distillation or by mechanical solid/liquid separation.

12. A process for producing a solution of a lithium borate salt, **characterised in that** a crude lithium borate salt-containing substance according to claim 6 is brought into contact with a solvent or solvent blend which dissolves the crude lithium borate salt and the crude lithium borate salt is dissolved therein.

13. A process according to claim 12, **characterised in that** as crude lithium borate salts those having the general formula I or formula II 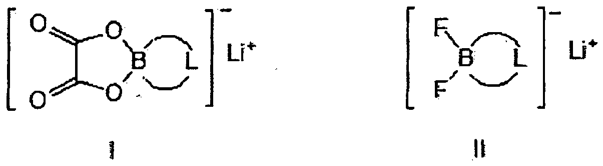 are used, wherein L is a chelating agent having two terminal oxygen atoms with the general formula 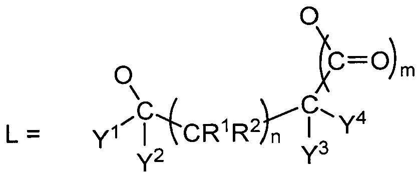 and wherein
■ Y¹ and Y² together denote =O, where m = 0 or 1, n = 0 or 1, o = 0 and R¹ and R² independently of one another denote H, F, Cl, Br, OR (R = alkyl) or R' (alkyl), or
■ Y¹, Y², Y³, Y⁴ independently of one another each denote OR (R = alkyl), H, F, Cl, Br, R' (alkyl), where m = 0 or 1, n = 0, o = 1, or
■ Y¹, C¹, Y³ and C² are members of a 5- or 6-membered aromatic or heteroaromatic ring (with N, O or S as heteroelement), which can optionally be substituted with alkyl, alkoxy, carboxy or nitrile, wherein Y² and Y⁴ are omitted, with n = 0 and m = 0 or 1, o = 1.

14. A process according to claim 12 or 13, **characterised in that** the aprotic solvent which dissolves the crude lithium borate salt contains ethers, ketones, carbonic acid esters, carboxylic acid esters, γ-lactones and/or nitriles or consists thereof.

## Revendications

1. Mélanges de sel brut de type borate de lithium, d'hydrure de lithium et d'un solvant ou mélange de solvants aprotique(s) qui ne dissout pas le sel de type borate de lithium, dans lesquels la proportion de l'hydrure de lithium, rapportée au poids du sel brut de type borate de lithium, vaut au moins 0,001 et au plus 10 % en poids et la concentration de matières solides, dissoutes et non dissoutes, dans le solvant vaut en tout au moins 5 % et au plus 95 %, et la teneur en eau vaut au plus 100 µmol/g et la teneur en acide vaut au plus 10 µmol(H⁺)/g de sel brut de type borate de lithium.

2. Mélanges conformes à la revendication 1, **caractérisés en ce que** l'hydrure de lithium s'y trouve à l'état de poudre présentant une taille moyenne de particules d'au plus 100 µm.

3. Mélanges conformes à la revendication 1 ou 2, **caractérisés en ce que** l'on utilise des sels bruts de type borate de lithium de formule générale I ou II : 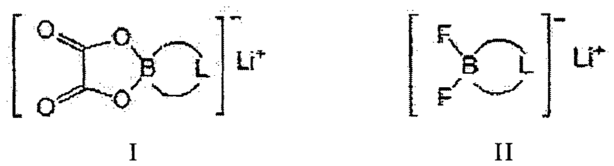 dans lesquelles formules L représente un agent chélatant qui comporte deux atomes d'oxygène en bout de chaîne, de formule générale 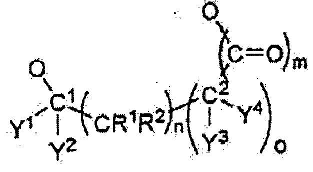 dans laquelle
- soit Y¹ et Y² représente conjointement l'entité symbolisée par =O, l'indice m vaut 0 ou 1, l'indice n vaut 0 ou 1, l'indice o vaut 0, et R¹ et R² représentent chacun, indépendamment l'un de l'autre, un atome d'hydrogène, de fluor, de chlore ou de brome, un groupe symbolisé par OR où R représente un groupe alkyle, ou un groupe alkyle symbolisé par R' ;
- soit Y¹, Y², Y³ et Y⁴ représentent chacun, indépendamment les uns des autres, un atome d'hydrogène, de fluor, de chlore ou de brome, un groupe symbolisé par OR où R représente un groupe alkyle, ou un groupe alkyle symbolisé par R¹, et l'indice m vaut 0 ou 1, l'indice n vaut 0 et l'indice o vaut 1 ;
- soit Y¹, C¹, Y³ et C² représentent des chaînons d'un cycle à 5 ou 6 chaînons, aromatique ou hétéroaromatique comportant un ou des atome(s) d'azote, d'oxygène ou de soufre comme hétéroatome(s), lequel cycle peut, en option, porter un ou des substituant(s) alkyle, alcoxy, carboxy ou cyano, il n'y a pas d'entités symbolisées par Y² et Y⁴, et l'indice m vaut 0 ou 1, l'indice n vaut 0 et l'indice o vaut 1.

4. Mélanges conformes à l'une ou plusieurs des revendications 1 à 3, **caractérisés en ce que** le sel brut de type borate de lithium est choisi dans l'ensemble formé par les suivants : bis(oxalato)-borate de lithium (LiBOB), malonato-oxalato-borate de lithium (LiMOB), glycolato-oxalato-borate de lithium (LiGOB), salicylato-oxalato-borate de lithium (LiSOB), lactato-oxalato-borate de lithium (LiLOB), pyrocatécholato-oxalato-borate de lithium (LiPCOB), difluoro-oxalatoborate de lithium (LiDFOB), difluoro-malonato-borate de lithium, difluoro-glycolato-borate de lithium, difluoro-lactato-borate de lithium, difluoro-salicylato-borate de lithium, et difluoro-pyrocatécholato-borate de lithium.

5. Mélanges conformes à l'une ou plusieurs des revendications 1 à 4, **caractérisés en ce que** le solvant ou le mélange de solvants aprotique(s) est choisi parmi les hydrocarbures saturés ou aromatiques, les hydrocarbures perfluorés ou partiellement fluorés et les dialkyl-éthers, ou contient de ces solvants.

6. Mélanges sans solvant, constitués de sel brut de type borate de lithium et d'hydrure de lithium dans lesquels la proportion de l'hydrure de lithium vaut au moins 0,001 et au plus 10 % en poids, et la teneur en eau vaut au plus 100 µmol/g et la teneur en acide vaut au plus 10 µmol(H⁺)/g de sel brut de type borate de lithium.

7. Mélanges sans solvant conformes à la revendication 6, **caractérisés en ce que** l'hydrure de lithium s'y trouve à l'état de poudre présentant une taille moyenne de particules d'au plus 100 µm.

8. Mélanges sans solvant conformes à la revendication 6 ou 7, **caractérisés en ce que** l'on utilise des sels bruts de type borate de lithium de formule générale I ou II : 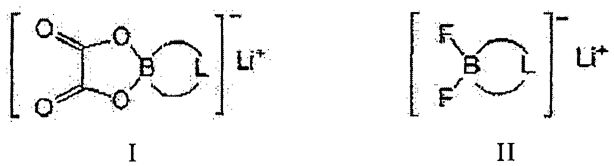 dans lesquelles formules L représente un agent chélatant qui comporte deux atomes d'oxygène en bout de chaîne, de formule générale 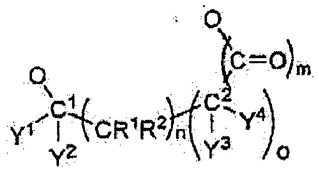 dans laquelle
- soit Y¹ et Y² représente conjointement l'entité symbolisée par =O, l'indice m vaut 0 ou 1, l'indice n vaut 0 ou 1, l'indice o vaut 0, et R¹ et R² représentent chacun, indépendamment l'un de l'autre, un atome d'hydrogène, de fluor, de chlore ou de brome, un groupe symbolisé par OR où R représente un groupe alkyle, ou un groupe alkyle symbolisé par R' ;
- soit Y¹, Y², Y³ et Y⁴ représentent chacun, indépendamment les uns des autres, un atome d'hydrogène, de fluor, de chlore ou de brome, un groupe symbolisé par OR où R représente un groupe alkyle, ou un groupe alkyle symbolisé par R', et l'indice m vaut 0 ou 1, l'indice n vaut 0 et l'indice o vaut 1 ;
- soit Y¹, C¹, Y³ et C² représentent des chaînons d'un cycle à 5 ou 6 chaînons, aromatique ou hétéroaromatique comportant un ou des atome(s) d'azote, d'oxygène ou de soufre comme hétéroatome(s), lequel cycle peut, en option, porter un ou des substituant(s) alkyle, alcoxy, carboxy ou cyano, il n'y a pas d'entités symbolisées par Y² et Y⁴, et l'indice m vaut 0 ou 1, l'indice n vaut 0 et l'indice o vaut 1.

9. Mélanges sans solvant conformes à l'une ou plusieurs des revendications 6 à 8, **caractérisés en ce que** le sel brut de type borate de lithium est choisi dans l'ensemble formé par les suivants : bis(oxalato)-borate de lithium (LiBOB), malonato-oxalato-borate de lithium (LiMOB), glycolato-oxalato-borate de lithium (LiGOB), salicylato-oxalato-borate de lithium (LiSOB), lactato-oxalato-borate de lithium (LiLOB), pyrocatécholato-oxalato-borate de lithium (LiPCOB), difluoro-oxalato-borate de lithium (LiDFOB), difluoro-malonato-borate de lithium, difluoro-glycolato-borate de lithium, difluoro-lactatoborate de lithium, difluoro-salicylato-borate de lithium, et difluoropyrocatécholato-borate de lithium.

10. Procédé de préparation d'un mélange, conforme à la revendication 1, de sel brut de type borate de lithium, d'hydrure de lithium et d'un solvant ou mélange de solvants aprotique(s) qui ne dissout pas le sel de type borate de lithium, lequel procédé est **caractérisé en ce qu'**on met un sel brut de type borate de lithium, en phase solide ou en suspension, en contact avec un solvant ou mélange de solvants aprotique(s) qui ne dissout pas le sel de type borate de lithium, ainsi qu'avec de l'hydrure de lithium, et l'on agite le tout ou on le mélange autrement, de manière appropriée, de telle sorte que les impuretés protiques s'éliminent totalement ou partiellement en réagissant et en donnant des produits neutres et/ou insolubles.

11. Procédé de préparation d'un mélange sans solvant, conforme à la revendication 6, de sel brut de type borate de lithium et d'hydrure de lithium, lequel procédé est **caractérisé en ce qu'**on réalise les opérations d'un procédé conforme à la revendication 10, et **en ce que** l'on sépare ensuite le solvant aprotique qui ne dissout pas le sel de type borate de lithium, soit par distillation, soit par séparation mécanique solide/liquide, d'avec le mélange de sel de type borate de lithium et d'hydrure de lithium.

12. Procédé de préparation d'une solution d'un sel brut de type borate de lithium, **caractérisé en ce qu'**on met un matériau contenant un sel brut de type borate de lithium, conforme à la revendication 6, en contact avec un solvant ou un mélange de solvants qui dissout le sel brut de type borate de lithium et **en ce qu'**on y dissout le sel brut de type borate de lithium.

13. Procédé conforme à la revendication 12, **caractérisé en ce que** l'on utilise un sel brut de type borate de lithium de formule générale I ou II : 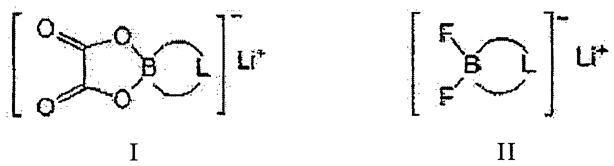 dans lesquelles formules L représente un agent chélatant qui comporte deux atomes d'oxygène en bout de chaîne, de formule générale 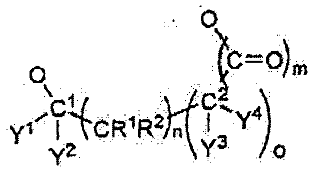 dans laquelle
- soit Y¹ et Y² représente conjointement l'entité symbolisée par =O, l'indice m vaut 0 ou 1, l'indice n vaut 0 ou 1, l'indice o vaut 0, et R¹ et R² représentent chacun, indépendamment l'un de l'autre, un atome d'hydrogène, de fluor, de chlore ou de brome, un groupe symbolisé par OR où R représente un groupe alkyle, ou un groupe alkyle symbolisé par R' ;
- soit Y¹, Y², Y³ et Y⁴ représentent chacun, indépendamment les uns des autres, un atome d'hydrogène, de fluor, de chlore ou de brome, un groupe symbolisé par OR où R représente un groupe alkyle, ou un groupe alkyle symbolisé par R', et l'indice m vaut 0 ou 1, l'indice n vaut 0 et l'indice o vaut 1 ;
- soit Y¹, C¹, Y³ et C² représentent des chaînons d'un cycle à 5 ou 6 chaînons, aromatique ou hétéroaromatique comportant un ou des atome(s) d'azote, d'oxygène ou de soufre comme hétéroatome(s), lequel cycle peut, en option, porter un ou des substituant(s) alkyle, alcoxy, carboxy ou cyano, il n'y a pas d'entités symbolisées par Y² et Y⁴, et l'indice m vaut 0 ou 1, l'indice n vaut 0 et l'indice o vaut 1.

14. Procédé conforme à la revendication 12 ou 13, caactérisé en ce que le solvant aprotique qui dissout le sel brut de type borate de lithium contient un éther, une cétone, un ester carbonate, un ester carboxylate, une gamma-lactone et/ou un nitrile ou est constitué d'un tel ou de tels composé(s).
